(19) Europäisches Patentamt
European Patent Office
Office européen des brevets

(11) Veröffentlichungsnummer: **0 010 766**
**B2**

(12) # NEUE EUROPÄISCHE PATENTSCHRIFT

(45) Veröffentlichungstag der neuen Patentschrift: **05.11.86**

(51) Int. Cl.⁴: **C 09 D 3/72,** C 08 G 18/08, C 08 G 18/80, C 09 D 5/44, C 25 D 13/06

(21) Anmeldenummer: **79104274.0**

(22) Anmeldetag: **02.11.79**

(54) **Hitzehärtbares, wässriges Lacküberzugsmittel, dessen Verwendung zur elektrischen Ablagerung und ein Verfahren zur kathodischen Beschichtung eines elektrisch leitenden Substrats.**

(30) Priorität: **06.11.78 AT 7899/78**

(43) Veröffentlichungstag der Anmeldung:
**14.05.80 Patentblatt 80/10**

(45) Bekanntmachung des Hinweises auf die Patenterteilung:
**26.05.82 Patentblatt 82/21**

(45) Bekanntmachung des Hinweises auf die Entscheidung über den Einspruch:
**05.11.86 Patentblatt 86/45**

(84) Benannte Vertragsstaaten:
**AT BE CH DE FR GB IT LU NL SE**

(56) Entgegenhaltungen:
**DE-A-2 057 799**
**DE-A-2 131 060**
**DE-B-2 033 770**
**DE-B-2 363 074**
**FR-A-2 068 616**
**US-A-4 031 050**

(73) Patentinhaber: **Herberts Gesellschaft mit beschränkter Haftung, Christbusch 25, D-5600 Wuppertal 2 (DE)**

(72) Erfinder: **Patzschke, Hans- Peter, Dr., Am Heckendorn 71, D-5600 Wuppertal 2 (DE)**
Erfinder: **Göbel, Armin, Osteroder Strasse 27, D-5600 Wuppertal 2 (DE)**

(74) Vertreter: **Türk, Dietmar, Dr. rer. nat., Türk, Gille + Hrabal Patentanwälte Bruckner Strasse 20, D-4000 Düsseldorf 13 (DE)**

EP 0 010 766 B2

**Beschreibung**

Die Herstellung von wasserverdünnbaren Harzen durch Einführung von Aminogruppen in den gewünschten Harzkörper und Salzbildung mit organischen Säuren ist bekannt. Solche quaternären Ammoniumsalze ergeben zwar sehr nützliche, auf metallenen Körpern kathodisch abscheidbare Filme, es werden jedoch nicht in allen Fällen die durch die Praxis gewünschten Anforderungen erfüllt.

In der DE-B-2363074 werden selbsthärtende Polyurethanharze beschrieben, die durch Umsetzung eines epoxigruppenhaltigen Harzes, welches zusätzlich OH-Gruppen enthält, mit einem halbverkappten organischen Polyisocyanat und zusätzlich Dialkylaminoalkylcarbonsäuren oder entsprechenden Alkoholen hergestellt werden. In Spalte 7, Zeile 58ff. ist dazu ausgeführt dass die Natur der löslichmachenden Gruppen weniger wichtig sei als die Anwesenheit eines tertiären N-Atoms. Es können also N-Atome mit beliebigen Alkylgruppen eingesetzt werden. Bei der Umsetzung mit den halbverkappten organischen Polyisocyanaten treten Reproduzierbarkeltsschwankungen auf, weil die Reaktivitätsunterschiede zwischen den einzelnen Isocyanatgruppen nicht sehr hoch sind, so dass unterschiedliche Anteile an nichtverkappten und vollverkappten Polyisocyanaten entstehen, was zu starken Eigenschaftsschwankungen und zu Stabilitätsproblemen führt.

In der DE-A-2753861 werden Bindemittel beschrieben, die durch Addition von sekundären Aminen an ungesättigte Doppelbindungen basisch gemacht werden und die über die überschüssigen Doppelbindungen oxidativ trocknend oder selbstvernetzend sind. Bei der Auswahl der Amine wird keine Rücksicht auf die Struktur genommen. Die Substituenten können sehr weit in der C-Kette variiert werden. Die für eine ausreichende Vernetzung notwendige Anzahl von ungesättigten Doppelbindungen ist oft nur unter Schwierigkeiten in den beabsichtigten Harzkörper einzuführen. Bei niedrigerem Doppelbindungsgehalt wird die Vernetzungsdichte geringer und damit der Korrosionsschutz schlechter. Der Einbau von funktionellen Gruppen zur Vernetzung mit geeigneten verkappten Polyisocyanaten wird nicht erwähnt.

In den De-A-2057799 und DE-A-2 131 060 werden Mischungen bestimmter wasserverdünnbarer Bindemittel mit vollverkappten Polyisocyanaten verwendet. Als synthetische Polyaminharze werden hierbei Polyaminoamidharze, Reaktionsprodukte aus Acrylsäurecopolymerisaten mit Alkyleniminen und endständige Aminogruppen enthaltende Polyharnstoffe oder Polyurethane ausgewählt. Die Anwendung solcher Kombinationen wird durch die ungenügende Verträglichkeit, bzw. Stabilität solcher Dispersionen eingeschränkt; es fallen bei längerem Stehen oft die wasserunlöslichen verkappten Polyisocyanate aus.

In der DE-A-2751 869 sind Bindemittel für die kathodische Abscheidung beschrieben. die ein Reaktionsprodukt von einem polymeren tertiären Amin und einem 1,2-Monoepoxid enthalten. Die damit hergestellten Uberzüge sind jedoch selbst bei Einbrenntemperaturen von 204°C nur in manchen Fällen hart, in manchen Fällen sogar klebrig (vgl. die Beispiele). Es besteht ein starkes Bedürfnis nach Bindemitteln, die bei niedrigeren Einbrenntemperaturen bereits harte Überzüge ergeben.

Aus der OE-A-2531 960 sind Bindemittel für die kathodische Abscheidung bekannt, die aus Umsetzungsprodukten von einem tertiären Amin-Säuresalz oder einer Sulphid-Säuremischung mit einem Polyepoxid einerseits und einem verkappten organischen Polyisocyanat anderseits bestehen. Der Nachteil der damit abgeschiedenen Überzüge besteht darin, dass die Ammoniumgruppe mit ihrer elektrischen Ladung im eingebrannten Film erhalten bleibt und Störstellen darelt.

Es ist die Aufgabe der vorliegenden Erfindung se Nachteile zu vermeiden, und durch geeignet Kombination von ausgewählten Kunstharzen Anwendungsmöglichkeiten auf Gebieten mit hohen Anforderungen zu verbessern und das Eigenschaftsniveau variabler zu gestalten. Im Gegensatz zu der Behauptung, dass Aminogruppen als Korrosionsinhibitoren wirken wurde überrahenderweise festgestellt dass mit steigendem Amingehalt des Bindemittels eine Verschlechterung der Haftung und damit auch des Korrosionsschutzes eintritt. Für die Praxis ist es ausserdem wichtig in pH-Wert-Bereüchen in arbeiten, die einen zerstörenden Angriff des Neutralisationsmittels auf die Beckenwandungen und die zu lackierenden Objekte vermeiden. Als Auswahlkriterium werden daher einmal die Herstellung von stabilen wasserverdünnbaren Lösungen mit einem pH-Wert von 5 bis 8 und zum zweiten die grösstmögliche Verringerung der für die Löslichkeit notwendlgen polaren Gruppen beim Einbrennen angesehen. Das Problem wird dadurch gelöst, dass thermisch labile N-Gruppierungen verwendet werden und die Polarität des Restmoleküls zusätzlich durch Umsetzung mit verkappten locyanaten besonders aminogruppenhaltigen verkappten Isocyanaten. weiter verringert wird. Durch diese Kombination wird es möglich, die Aushärtetemperatur der in der DE-B-2753661 verwendeten Harztypen zu senken.

Gegenstand der Erfindung ist ein wässriges, hitzehärtbares Lacküberzugsmittel auf der Grundlage eines durch Säure wasserverdünnbar gemachten Bindemittelgemisches und gegebenenfalls üblichen Zusätzen, dadurch gekennzeichnet, dass sie als Bindemittel in Kombination enthält

A. 50 bis 95 Gew.-% tertiäre Aminogruppen enthaltendes und OH-gruppenhaltiges Polymertsat und/oder Polykondensat (Komponente A) mit der Strukturgruppe

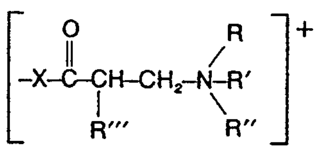

wobei bedeuten:
X = -O-,-NH-oder-$C_6H_4$
R = -$C_nH_{2n+1}$ bei n = 1 bis 5
R' = -$C_mH_{2m+1}$bei m = 1 bis 5
n + m = 2 bis 6
oder R + R' bilden gemeinsam mit dem N-Atomeinen Piperidin- oder Morpholinring.
R"- -H,-$C_pH_{2p+1}$
oder -$C_pH_{2p}OH$ bei P = 1 bis 3
R" = -H, -$CH_3$ oder -$C_2H_5$ und einer Aminzahl von 30 bis 170, speziell 60 bis 120 und elner OH-Zahl von 30 bis 300.

B. 5 bis 40 Gew.-0% eines vollverkappten Polyisocyanats (Komponente B), das in der wässrigen Phase stabil ist und bei Wärmeeinwirkung nach Abspaltung der Verkappungsgruppe wieder reaktiv wird,

C. 5 bis 30 Gew.-% eines opoxidgruppenfreien Polymerisats oder Polykondensats mit primären und/oder sekundärenmit verkappten Polyisocyanate reaktionsfähigen OH-und/oder Aminogruppen (Komponente C), wobei die Summe von A, B und C jeweils 100 Gew.% betragen muß.

Die bei der thermischen ß-Eliminierung entstehenden Amine besitzen eine hohe Flüchtigkeit (Kp von - 10 bis +160° C, speziell 5 bis 115° C) und eine möglichst hohe Basizität ($pK_b$-Wert von 2.5 bis 5,5, speziell 2,8 bis 4.0).

Die Aminzahl der Komponente B beträgt zweckmässig 10 bis 120. speziell 25 bis 100.

Die Aminzahl der Komponente C beträgt zweckmässig 0 bis 250. bevorzugt 20 bis 200. besonders bevorzugt 30 bis 100, und die OH-Zahl zweckmässig 30 bis 500, bevorzugt 100 bis 300.

Die eflindungsgemässen Bindemittel sind besonders gut für die kathodische Elektrotauchlackierung elektrisch leitender Oberflächen. insbesondere von Metallteilen wie Eisen geeignet. Es entstehen auf der Kathode festhaftende Uberzüge mit sehr hoher Beständigkeit gegen Alkalien und Salzsprühnebel, die sich schon ohne Korrosionsschutzinhibitoren auf nichtgebonderten blanken Blechen vorteilhaft bemerkbar macht und besonders hohe Elastizitätswerte zeigt.

Als Komponente A wird ein Harz verwendet, das am β-C-Atom des tertiüren oder quaternären Amins ein Wasserstoffatom enthält und zusätzlich durch eine polare C=O-Gruppe acidifiziert wird. Solche Komponenten zerfallen beim Erhitzen durch β-Eliminierung in Olefine und die entsprechenden Amine. Die hierbei entstehenden Amine sollten eine hohe Basizität und Flüchtigkeit besitzen. Dieser Aufbau bewirkt, dass bei einem pH-Wert von 5 bis 8 eine ausgezeichnete Wasserverdünnbarkeit erzielt und beim Einbrennen des Films ein grosser Teil des Amins thermisch abgespalten wird. Bei Verwendung von Umsetzungsprodukten, die sich von sekundären Aminen wie Dimethylamin. Diäthylamin. N-Methyl-isobutylamln, N-Methyl-sek-butylamin. N-Methyl-äthanolamin, Piperidin oder Morpholln ableiten. werden brauchbare Ergebnisse erzielt. Die Leichtigkeit der Abspaltbarkeit wird durch Ouaternierung des N-Atoms beeinflusst und kann durch starke Basen katalysiert werden.

Die Höhe des pH-Wertes und der Badleitfähigkeit wird durch den Neutralisationsgrad und die Aminzahl beeinflusst. Als praktisch handhabbar erwiesen sich Aminzahlen von 30 bis 170. speziell 60 bls 120. d.h. etwa 0,5 bis 3,0, speziell 1,0 bis 2,1 Milliäquivalente Amin pro Gramm Festharz. Mit höherer Aminzahl wird bei gleichem Neutralisationsgrad ein höherer pH-Wert und eine höhere Badleitfähigkeit erzielt. Durch eine OH-Zahl von 30 bis 300. d.h. etwa 0.5 bis 5,3 Milliäquivalente OH pro Gramm Festharz wird die Löslichkeit des Harzes wesentlich verbessert. Die OH-Gruppen entstehen bei der Umsetzung der Epoxigruppen mit 0-P-ungesättigten Carbonsäuren, durch Verwendung von Aminoalkoholen bei der Aminaddition oder durch Einführen von überschüssigen ungesättigten OH-Monomeren in das Copolymerisat. Die Viskositäten der Komponente A betragen etwa 400 bis 6000 mPa.s gemessen bei 25° C nach Verdünnen mit Butylglykol auf 60 Gew.-%. Um eine hohe Abscheidespannung zu erzielen, wird eine so hohe Viskosität (= hohes, mittleres Molekulargewicht) angestrebt, wie sie ohne Verschlechterung des Verlaufs und der Pigmentierbarkeit vertreten werden kann. Das geeignete mittlere Molekulargewicht kann auch durch Mischen zweier Harze mit unterschiedlich hohen mittleren Molekulargewichten erhalten werden.

Die Komponente A wird nach bekannten Verfahren hergestellt, z. B. durch Addition von reaktionsfähigen. basischen NH-Verbindungen mit α,β-ungesättigten Carbonsäurepolyestern oder durch Kondensation oder Addition von Dialkylaminopropionsäure oder Aminoacetophenon an geeignete reaktiveGrundgerüste. Beispiele für die α, β-. ungesättigten Carbonsäurepolyester sind Umsetzungsprodukte von
- COOH-haltigen Acrylatharzen mit Glycidyl(meth)acrylat.
- OH-gruppenhaltige Acrylatharzen oder Alkydharzen mit ungesättigten Monoisocyanaten,
- epoxigruppeenhaltigen Harzen mit α,β-ungesättigten Monocarbonsäuren, α,β-ungesättigten (Meth)acrylamiden oder Halbestern von α,β-ungesättigten Dicarbonsäuren mit Hydroxialxyl(meth)acrylaten.

Die Addition des reaktiven Amins edolgt stöchiometrisch, jedoch stört ein Überschuss an Doppelbindungen

nicht. Es ist durch die Reaktionsführung nur dafür zu sorgen, dass alles Amin umgesetzt wird. Die exotherme Reaktion wird in Substanz oder in Gegenwart von Lösungsmitteln wie Isopropanol, sek.-Butanol, Äthylglykol, Butylglykol, Xylol oder Methylisobutylketon bei Temperaturen von 20 bis 100°C durchgeführt, wobei die Lösungsmittel entweder im Harz verbleiben können, oder nach der Umsetzung gegebenenfalls unter Vakuum abdestilliert werden müssen.

Als besonders geeignet erweisen sich für die Herstellung von α,β-ungesättigten Carbonsäurepolyestern epoxigruppenhaltige Harze, die mehr als eine Epoxigruppe pro Molekül enthalten, die hergestellt werden durch

a) Einführen von Glycidylgruppen über z.B. Epichlorhydrin.

aa) in OH-funktionelle Harze (= Polyglycidyläther, Epoxi-Novolake),

ab) in COOH-funktionelle Harze (= Polyglycidylester), oder

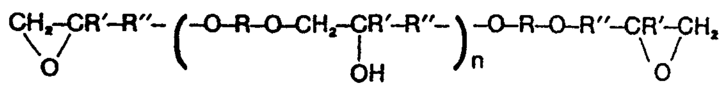

worin bedeuten

R = 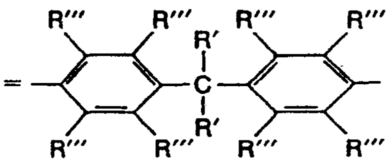

R' = Wasserstoff oder $-C_nH_{2n+1}$

R'' = $-(CR'_2)_n$

R'' = -R' oder Halogen vorzugsweise Wasserstoff

n = 0 bis 3

mit einem mittleren Molekulargewicht (Mn) von etwa 300 bis 3000 und einem Epoxiäquivalentgewicht von etwa 180 bis 2200. Die Symbole R', R'' und/oder R'' können jeweils gleiche oder verschiedene Bedeutung haben. Diese Harze können auch in hydrierter Form eingesetzt werden. Um die Eigenschaften des erhaltenen Films zu steuern, ist es oft notwenig, einen Teil der reaktionsfähigen Gruppen des Epoxiharzes mit einem modifizierenden Material z. B. gesättigten oder ungesattigten Carbonsäuren oder Aminen, umzusetzen.

Für die Verätherung eines Polyphenols mit Epichlorhydrin in Gegenwart von Alkali werden z.B. Bis-(4-hydroxiphenyl-2,2-propan,

4,4'-Dihydroxybenzophenol,

Bis-(4-hyd roxiphenyl)-1,1-äthan.

Bis-(4-hydroxi-tert.-butylphenyl)-2,2-propan,

Bis-(2-hydroxinaphthyl)-methan oder

1,5-Dihydroxinaphthalin verwendet.

Epoxidierte Polyglycidyläther werden nicht nur auf Basis Bisphenol A hergestellt, sondern können auch andere Grundkomponenten enthalten, wie Triglycidylisocyanurat. heterocyclische Diglycidylverbindungen (DE-OS 1 816095), substituierte Hydantoine (US-A-3391 097) oder epoxidierte natürliche oder synthetische Öle wie epoxidiertes Butadienöl verschiedener Konfiguration.

Bevorzugt ist, dass die epoxigruppenhaltigen Harze Glycidyl(meth)acrylat-Copolymere mit einem mittleren Molekulargewicht (Mn) von etwa 800 bis 6000 und einem Epoxiäquivalentgewicht von 800 bis 3000 sind, die durch Copolymerisation von Glycidyl(meth)acrylat mit ungesättigten Monomeren erhalten wurden. Ungesättigte Monomere sind z.B. Styrol, Vinyltoluol, (Meth)acrylsäureester verschiedener Kettenlänge, wobei die Methacrylsäureester bevorzugt $C_1$ bis

ac) in $NH_2$-funktionelle Harze (= Polyglycidylamine)

b) Einpolymerisieren von Glycidyl(meth)acrylat in eine geeignete Monomerenmischung von z.B. Styrol und/oder (Meth)acrylsäureestern verschiedener Kettenlänge und/oder Hydroxialkyl(meth)acrylaten.

Besonders bevorzugt sind als epoxigruppenhaltige Harze gemäss a) die Polyglycidyläther der allgemeinen Formel:

$C_4$-Alkohole und die Acrylsäureester bevorzugt $C_2$ bis $C_8$-Alkohole enthalten.

Als zusätzliche Komponente können gegebenenfalls hydroxylgruppenhaltige Monomere wie Hydroxialkyl(meth)acrylsäureester, z. B. 2-Hydro-xipropylmethacrylat, 1.4-Butandiolacrylat oder Hydroxiäthylacrylat oder verätherte Methylolderivate des (Meth)acrylamids verwendet werden. Die Mischpolymerisation efolgt in organischen Lösungsmitteln wie Alkoholen oder Glykoläthern bei etwa 60 bis 145°C unter Zusatz von radikalischen Initiatoren wie Peroxiden, Hydroperoxiden, Perestern oder thermisch spaltbaren Azoverbindungen.

Die Komponente A kann jedoch auch noch nach anderen bekannten Wegen hergestellt werden, wie durch Umsetzung der oben beschriebenen epoxigruppenhaltigen Harze mit Dialkylaminopropionsäure. Ein anderer

Herstellungsweg ist die Imidbildung von maleinisierten natürlichen oder synthetischen Ölen, wie Butadienöl verschiedener Konfiguration mit Aminoacetophenon und anschliessende Reaktion mit Formaldehyd und sekundären Aminen.

Vernetzungsmittel, die in das wasserverdünnbare, kathodisch abscheidbare Harz einemulgiert werden, sind vollverkappte Polyisocyanate (Komponente B). Sie sollen in der wässrigen Phase lagerstabil seln und bei Wärmeeinwirkung nach Abspaltung der Schutzgruppen mit den im Harzverband noch vorhandenen reaktiven Hydroxylgruppen vernetzen.

Als Polyisocyanate eignen sich alle in der Polymerchemie bekannten Polyisocyanate auf Basis aromatischer, aliphatischer und/oder cycloaliphatischer Grundkörper mit mindestens zwei Isocyanatgruppen pro Molekül. Typische Beispiele sind die Isomeren bzw. Isomerengemische des Toluylendiisocyanats. des 4.4'-Diphenylmethandiisocyanats und ihrer Hydrierungsprodukte, sowie Isophorondiisocyanat oder Hexan-1,6-diisocyanat und ihre durch Trimerisation, Umsetzung mit Wasser oder Polyalkoholen entstehenden höhermolekularen Polyisocyanate. Durch Reaktion mit Polyäthern, Polyestern, Polyamiden, Polylactonen oder Butadienöldiolen mit überschüssigen Polyisocyanaten können höhermolekulare Polyisocyanate hergestellt werden. Als Verkappungsgruppen werden verwendet Phenole, Kresole, Thiopenole, Oxime, Lactame, Acetessigester, Acetylaceton, Malonester, Phthalimid, Imidazol oder Alkohole.

Um die Verträglichkeit der Komponente A und B zu fördern und die Löslichkeit in Wasser zu verbessern. werden vorteilhaft solche vollverkappten Polyisocyanate verwendet, die basische N-Gruppen enthalten. z.B.

1. Polyisocyanate mit aminogruppenhaltigen Verkappungsgruppen, hergestellt durch Reaktion von Polyisocyanaten mit z.B. N-Dialkylaminophenolen. N-Dialkylaminoketoximen oder Dialkylaminoalkoholen bei Temperaturen von etwa 40 bis 90° C in wassefreiem Medium.

Die Alkylgruppen enthalten zweckmässig 1 bis 5. vorzugsweise 1 oder 2 Kohlenstoffatome. Sie spalten beim Einbrennen die Verkappungsgruppe wieder ab und stören nicht den Amingehalt im Film.

2. Polyisocyanate, die verknüpft sind mit tertiären Aminopolyalkoholen, wie N-Methyldiäthanolamin, Triäthanolamin oder Ketiminpolyalkoholen, z.B. ein durch Wasserabspaltung aus Aminomethylpropandiol und Methylisobutylketon hergestelltes Ketimin. Diese Produkte spalten praktisch das N-Atom nicht mehr ab und zeigen bei guter Verträglichkeit oft eine höhere Reaktivität. Im Fall des Ketimins wird beim Lösen des Harzes in Wasser eine primäre Aminogruppe frei, die zusätzlich mit anderen vollverkappten Isocyanaten zum Harnstoff umgesetzt werden kann.

Es werden bevorzugt vollverkappte Polyisocyanate mit einer Aminzahl von 10 bis 120, speziell von 25 bis 100 verwendet. Die Auswahl der Herstellungsmethodik hängt von den gewünschten Bad- und Filmeigenschaften ab. Nach Methode 2 werden höhermolekulare Harze erhalten, die eine bessere Verträglichkeit kombiniert mit höheren Abscheidespannungen und höheren Filmelastizitäten zeigen. Werden solche vollverkappten Polyisocyanate mit hohen Aminzahlen gewünscht, müssen sie zusätzlich aminogruppenhaltige Verkappungsgruppen aufweisen.

Das Verhältnis der Komponente A zur Komponente B beträgt etwa 95 zu 5 bis 60 zu 40 Gew.-% Zwischen NCO- und OH-Gruppen besteht ein solches Äquivalenzverhältnis, dass auf 0,1 bis 1 vollverkapptes Isocyanat etwa 1 freie OH-Gruppe kommt. Bevorzugt werden etwa stöchiometrische Verhältnisse. Das Einarbeiten des Vernetzungsmittels erfolgt so dass die Harze A und B als Konzentrate gemischt, danach gemeinsam neutralisiert und mit Wasser allmählich verdünnt werden. die Härtung des Gemisches erftolgt durch etwa 15 Minuten bis 1 Stunde langes Einbrennen über 120°C, vorzugsweise bei etwa 160 bis 210°C. Durch Zumischen geeigneter Katalysatoren in einer Konzentration von etwa 0,1 bis 4 Gew.-% bezogen auf Harzfestkörper kann die Einbrenntemperatur gesenkt werden. Es eignen sich hierfür organische Metallverbindungen wie Zinkoctoat, Dibutylzinndilaurat, Eisen- oder Zinkacetylacetonat.

Zum Ausbalancieren der anwendungstechnischen Eigenschaften ist es zweckmässig, dass das kathodisch abscheidbare Bindemittel ausser dem Vernetzungsmittel noch zusätzlich bis zu 30 Gew.-% bevorzugt 5 bis 20 Gew.-% eines mit verkappten Polyisocyanaten reaktionsfähigen NH- oder OH-gruppenhaltigen Harzes (Komponente C) enthält. So können zur Steigerung des Umgriffs hydroxylgruppenhaltige Harze mit einer OH-Zahl von 30 bis 500, speziell 100 bis 300, und einem mittleren Molekulargewicht von 500 bis 5000 eingesetzt werden, z. B. Styrol-Allylalkohol-Copolymere, OH-gruppenhaltige (Meth)acrylcopolymere, Caprolactonpolyole, Urethanpolyole, OH-gruppenhaltige Polyester und Polyäther oder auch OHgruppenhaltige Epoxiharzester. Zum Erzielen einer besseren Verträglichkeit und Wasserlöslichkeit enthalten diese hydroxylgruppenhaltigen Harze auch eine Aminzahl von 0 bis 250, vorzugsweise 20 bis 200 und besonders vorteilhaft 30 bis 100. Solche Polyaminoalkohole werden z. B. durch Umsetzung von festen oder flüssigen Polyglycidyläthern oder -estern auf Basis Bisphenol A mit Dialkylaminen oder Alkanolaminen, die noch eine reaktive NH-Gruppe enthalten wie Diäthanolamin, Diisopropanolamin, N-Methyl-äthanolamin oder N-Cyclohexyläthanolamin erhalten. Bei Verwendung von niedermolekularen Polyglycidyläthern kann das Molekulargewicht durch Einbau von primären Aminen oder Aminoalkoholen wie Isore Reaktion genügend OH-Gruppen, bevorzugt primäre OH-Gruppen vorhanden sind. Da die tertiären N-Gruppen nicht mehr mit dem Vernetzungsmittel reagieren können und daher im Film als potentielle Störstellen erhalten bleiben, ist es zweckmässig, diesen Gehalt möglichst niedrig zu halten. Es genügt die Menge an polaren Gruppen, die es gestattet, das Harz einwandfrei in dem wasserlöslichen Trägerharz (Komponente A) zu emulgieren. Die Harze müssen in einem Molekulargewichtsbereich liegen, dass sie beim Einbrennen nicht mehr flüchtig sind, jedoch eine verbesserte Fliessfähigkeit zur guten Filmbildung erzielen.

Zum Elastifizieren der Harze haben sich als Komponente C besonders Zusätze von NH-gruppenhaltigen

Harzen wie Polyaminoamiden bewährt. Sie werden durch Polykondensation von niederen, aliphatischen Polyaminen und/oder Aminoalkoholen gegebenenfalls im Gemisch mit Polyolen, mit mehrbasischen Carbonsäuren und/ oder deren Anhydriden hergestellt. Als niedere aliphatische Polyamine und/oder Aminoalkohole, die in stöchiometrischem Überschuss verwendet werden, dienen z. B. niedere aliphatische Polyamine wie Äthylendiamin oder Diäthylentriamin oder Aminoalkohole wie Dimethylaminoäthanol oder Diisopropanolamin oder Gemische davon. Als mehrbasische Säuren werden Adipinsäure, Acelainsäure oder bevorzugt dimerisierte Fettsäuren eingesetzt. Eine niedrige Aminzahl wird durch anteilsweise Verwendung von z.B. niedermolekularen Polyolen wie Neopentylglykol oder höheren polymeren Polyolen wie Polyesterpolyolen, Polyätherpolyolen, Polycaprolactonpolyolen erzielt. Die Abstimmung geeigneter Aminzahlen mit dem Molekulargewichtsbereich erfolgt durch Zusatz geeigneter Kettenabbruchsmittel wie gesättigten oder ungesättigten Monocarbonsäuren, Monoalkoholen oder Monoaminen. Die Kondensation erfolgt in üblicher Weise in der Schmelze oder als azeotrope Kondensation bei Temperaturen von etwa 150 bis 250°C. Dieser Harztyp ist gekennzeichnet durch seinen hohen Anteil an basischen NH-reaktiven Gruppen, die mit dem Vernetzungsmittel beim Einbrennen reagieren und damit im Film unschädlich gemacht werden.

Das Einarbeiten der OH- oder NH-gruppenhaltigen Harze erfolgt ebenso wie die des Vernetzungsmittels. Beim Einsatz von Polyaminoamidharzen können Schwierigkeiten durch den hohen Gehalt an Wasserstoffbrücken entstehen (Thixotropie). Es ist in diesen Fällen dann angebracht, eine Paste unter Zusatz von organischen Säuren und Wasser zu machen, und diese gesondert in das anneutralisierte, unverdünnte Bindemittel-Gemisch einzuarbeiten.

Die verschiedenen aminogruppenhaltigen Grundharztypen (Komponente A) können entweder allein oder als Gemisch mehrerer Harze mit dem zugehörigen Vernetzungsmittel (Komponente B) und der Komponente C eingesetzt werden. So kann es z.B. zur Abstimmung der mechanischen und elektrischen Eigenschaften notwendig sein, dass ein aminogruppenhaltiger Epoxiharzester mit einem Polyaminoamidharz zusammen verwendet wird. Die Mischung dieser gegebenenfalls in organischen Lösungsmitteln anverdünnten Konzentrate kann auch unter Rühren und Inertgas so lange aut Temperaturen von 50 bis 200°C, vorzugsweise 80 bis 150°C erwärmt werden, bis die Komponenten miteinander nach dem Verdünnen verträglich geworden sind. Durch diese Präkondensation erfolgt in einem gewissen Umfang eine Verknüpfung der Komponenten A und B bzw. C und B. Die ablaufende Reaktion kann leicht an der Viskositätsänderung der Kondensationsreaktion beobachtet werden. Es werden dabei Viskositäten von 0,5 bis 10 Pa. s, vorzugsweise von 1 bis 5 Pa. s nach Verdünnen auf 50 Gew.-% mit Monobutylglykoläther bei 25°C gemessen. Die Reaktionszeiten betragen etwa 1 bis 5 Stunden. Zweckmässig erfolgt das Erhitzen in einer 60 bis 95 gewichtsprozentigen, bevorzugt 75 bis 90 gewichtsprozentigen Lösung in organischen Lösungsmitteln, bevorzugt aliphatischen Alkoholen mit 1 bis 6, zweckmässig 2 bis 4 C-Atomen, besonders zweckmässig sekundären Alkoholen oder deren Monoglykoläthern. Bei zu weit gehender Präkondensation tritt zuerst eine Verschlechterung des Verlaufs im Film, später ein Gelieren des Ansatzes ein. Das Mischungsverhältnis wird so gewählt, dass die Summe der Aquivalente der OH-Gruppen der Komponenten A und C zu den Äquivalenten der blockierten Isocyanate der Komponente B im Bereich von etwa 1:5 bis 1:0,1, vorzugsweise 1:3 bis 1:1 liegt. Besonders bevorzugt wird ein stöchiometrisches Aquivalenzverhältnis angestrebt.

Die Wasserlöslichkeit wird durch Salzbildung des aminogruppenhaltigen Harzes mit sauren Verbindungen erzielt. Hierzu eignen sich beispielsweise Salzsäure, Essigsäure, Ameisensäure, Malonsäure, Milchsäure, Dimethylolpropionsäure, Zitronensäure, Borsäure, Kohlensäure, Phosphorsäure, Acrylsäure usw. Um hohe Badleiffähigkeiten zu erzielen, erweisen sich Säuren mit möglichst niedrigem Molekulargewicht bzw. kleiner Solvathülle und Säuren, die sich beim Einbrennen des Films in gasförmige Produkte zersetzen, als vorteilhaft. Mit Wasser verdünnbare, als Bindemittel dienende kationische Harze können hergestellte werden, indem man dem basischen Harz bzw. Harzgemisch 0,2 bis 1,2 àquivalent, vorzugsweise 0,3 bis 0,8 Äquivalent der sauren Verbindung bezogen auf das basische Stickstoffatom im Harzgemisch zusetzt, und das Gemisch bei Temperaturen von etwa 20 bis 90°C gut rührt.

Das Bad kann zur Senkung der Viskosität, zur Steuerung der Abscheidespannung und zur Verbesserung des Verlaufs bis zu ungefähr 15 Gew.-% organische Lösungsmittel enthalten. Es können hierbei wasserlösliche Lösungsmittel wie Alkohole, Glykoläther, Ketoalkohole, Cyclohexanon, ebenso wie geringe Anteile nicht wasserlöslicher Lösungsmittel wie Kohlenwasserstoffe verschiedener Kettenlänge verwendet werden. Es wird ein möglichst niedriger Lösungsmittelgehalt angestrebt.

Der Feststoffgehalt des Lackes, in dem das Überzugsmittel gemäss der Erfindung in verdünnter Form enthalten ist, richtet sich nach der jeweiligen Auftragsmethode. Zum Tauchen ohne Aneiner elektrischen Spannung oder zum Spritzen sind Feststoffgehalte von 30 bis 60u Gew.-% zweckmässig. Zur kathodischen Abscheidung aus einem Lackbad auf elektrisch leitenden Oberflächen beträgt er nach dem Verdünnen mit Wasser zweckmässig 5 bis 30 Gew.-%, vorzugsweise 10 bis 2ü Gew.-%. Der pH-Wert des Lackes liegt im allgemeinen zwischen 5,0 und 7,5, vorzugsweise zwischen 6,0 und 7,0. Die elektrophoretische Abscheidung erfolgt zweckmässig frühestens 24 Stunden nach Herstellung des Bades. Während dieser Zeit wird zweckmässig kontinuierlich gerührt, um eine gleichmässige Verteilung zu erreichen.

Als Anode werden elektrisch leitfähige, nichtkorrodierende Elektroden z B aus nichtrostendem Stahl oder Graphit verwendet. Der kathodisch zu beschrichtende gegenstand und die Anode werden, wie für die elektrophoretische Abscheidung bekannt, in ein wässriges Bad getaucht. Während der Abscheidung wird das Bad bei Temperaturen von zweckmässig 20 bis 35°C gehalten. Festkörper, Abscheidetemperatur und -zeit, sowie Spannung werden so gewählt, dass die gewünschte Schichtstärke nach Abspülen und Einbrennen

erhalten wird.

Die Konzentrate mit einem Festkörper von 85 bis 60 Gew.-% können in üblicher Weise z.B. mit Kugelmühle, Dreiwalze oder Perlmühle pigmentiert werden und sind nach dem Verdünnen auf Verarbeitungskonsistenz nach allen üblichen Auftragsveflahren (Aufstreichen. Aufwalzen. Spritzen. Tauchen) verarbeitbar. Zum Pigmentieren können übliche Pigmente. Füllstoffe, Korrosionsschutz-Inhibitoren und Lackhilfsmittel wie Antischaummittel oder Sikkative verwendet werden, solange sie mit Wasser im sauren pH-Bereich keine störenden Reaktionen eingehen. keine wasserlöslichen Fremdionen einschliessen und beim Altern nicht ausfallen. Die Lacke sind besonders zum Elektrotauchlackieren von Metallen geeignet und geben nach dem Einbrennen glatte, harte Filme mit guter Haftfähigkeit und Elastizität, sowie besonders gute Korrosionsschutz-Beständigkeit. Das Pigment-Bindemittelverhältnis ist abhängig von der Viskosität des Bindemittels und liegt im allgemeinen zwischen 0.1:1 und 1,5:1.

Grundharz A (Komponente A)

754 g einer 75 %igen Lösung eines Polyglycidyläthers auf Basis Bisphenol A (Epikote 1001) mit einem Epoxiäquivalentgewicht von etwa 475 in technischem Xylol werden unter Zusatz von 1,5g Triphenylphosphin in einen Reaktionskolben mit Rückflusskühler eingefüllt und unter Inertgas und langsamem Rühren aufgeheizt. Bei 50 bis 60° C wird eine Lösung von 0,4g Hydrochinon in 81,5 g Acrylsäure zugegeben und irl einer Stunde bis auf 130° C geheizt. Die Temperatur wird gehalten, bis die Säurezahl etwa 20 bis 25 beträgt. Danach wird auf 145° C weiter aufgeheizt. Diese Temperatur wird gehalten. bis die Säurezahl bei einem errechneten Festkörper von 77 Gew.-% etwa 0,1 beträgt. Danach wird auf 100° C abgekühlt und mit 115 g Butylglykol verdünnt.

Festkörper:

65,6 Gew.-% (gemessen durch 40 Minuten langes Erwärmen auf 180° C)

Säurezahl:

0,06 mg KOH/g Festharz

OH-Zahl:

128 mg KOH/g Festharz

Viskosität:

1230 mPa. s (gemessen nach Verdünnen mit Butylglykol auf 60 Gew.-% bei 25° C).

800 g der so erhaltenen Lösung werden auf 60° C erwärmt, und in etwa einer halben Stunde werden 61.4 g Diäthylamin zugetropft, wobei die Temperatur auf 80° C ansteigt. Man lässt die Temperatur wieder auf 60° C fallen und destilliert 3 Stunden nach Zutropfende unter Vakuum das Xylol ab.

Festkörper:

81 Gew.-% (1Std., 150° C)

Viskosität:

3604 mPa. s (nach Verdünnen auf 60 Gew.-% mit Butylglykol bei 25° C)

Aminzahl = 80 mg KOH/g Festharz.

Man verdünnt mit Isopropanol auf 75 Gew.-%

Polyisocyanat A (Komponente B)

1139 g eines biuretgruppenhaltigen aliphatischen Triisocyanats auf Basis Hexamethylendiisocyanat (Desmodur N) werden in 985 g wasserfreiem Essigester gelöst und auf 80° C erwärmt.

Nach Einstreuen von 339g ε-Caprolactam wird 2 Stunden auf 80° C gehalten. Danach werden 119 g N-Methyldiäthanolamin in etwa 15 Minuten eingetropft. und es wird wieder eine Stunde bei 80° C gehalten. Anschliessend werden 113 g ε-Caprolactam eingestreut und es wird 2 Stunden bei 80° C gehalten. Nach Abdestillieren des Essigesters wird mit sekundärem Butanol auf 80 Gew.-% verdünnt.

Aminzahl = 32 mg KOH/g Festharz.

Polyisocyanat B (Komponente B)

429 g Isophorandiisocyanat werden auf 80° C aulgewärmt. Dann werden 378 g ε-Caprolactam in drei Stunden so langsam zugegeben, dass die Reaktionstemperatur 100° C nicht überschreitet. Danach wird so lange bei dieser Temperatur gehalten. bis der NCO-Gehalt unter 0,1% abgesunken ist.

Man verdünt mit Butylglykol auf 80 Gew.-%.

Polyaminoamid-Paste (Komponente C)

200 g eines käuflichen Polyaminoamidharzes (Versamid 100) mit einer Aminzahl von 88 und einer Viskosität von 760 mPa. s bei 150° C werden mit 100 g Butylglykol auf etwa 80° C erwärmt und in Abständen von 15 Minuten werden folgende Portionen gut eingerührt:

1. 8,4 g Essigsäure und 10,0 g Wasser
2. 50 g Wasser
3. 100 g Wasser
4. 250 g Wasser
5. 615 g Wasser

Danach wird eine Stunde bei 80° C gut gerührt. Festkörper:

15,2 Gew.-% (gemessen nach 25 Minuten langem Erwärmen auf l80° C).

**Vergleich 1**

226,7 g Grundharz A wurden mit 37,5 g Polyisocyanat B gemischt und unter Zusatz von 22,5 g Milchsäure (80%ig) allmählich mit entionisiertem Wasser auf einen Festkörper von 10 Gew.-% verdünnt. Die gemessenen Bad- und Filmeigenschaften sind in Tabelle 1 zusammengefasst. Bei Abscheidespannungen über 150 Volt entstanden elektrische Durchbrüche.

**Vergleich 2**

170 g des Polyaminoamidharzes mit einer Aminzahl von 88 und einer Viskosität von 760 mPa. s bei 150°C (Versamid 100) wurden in 85 g Butylglykol gelöst. mit 37,5 g Polyisocyanat B gemischt und unter Zusatz von 22,5 g Milchsäure (80%ig) allmählich mit entionisiertem Wasser verdünt. Die verdünnte Lösung war schaumig und thixotrop. Es konnte kein brauchbarer Film abgeschieden werden.

**Beispiel 2**

200 g Grundharz A wurden erst mit 37,5 g Polyisocyanat B gemischt und dann durch Zusatz von 27 g Milchsäure (80°%ig) anneutralisiert. Nach langsamem Einrühren von 400 bis 500 g entionisiertem Wasser wurden 113 g Polyaminoamid-Pa ste zugesetzt. Anschliessend erfolgte das Verdünnen mit entioniserem Wasser auf einen Festkörper von 10 Gew.-%. Beim längeren Stehen kann sich die Dispersion in zwei Phasen trennen.

**Beispiel 3**

200 g Grundharz A wurden erst mit 37,5 g Polyisocyanat A gemischt und dann durch Zusatz von 27 g Milchäure (80%ig) anneutralisiert. Nach langsamem Einrühren von 400 bis 500 g entionisiertem Wasser wurden 133 g Polyaminoamid-Paste zugegeben. Anschliessend erfolte das Verdünnen mit entionisiertem Wasser auf einen Festkörper von 10 Gew.-%. Die Lösung blieb stabil und liess sich elektrophoretisch gut abscheiden. Die gemessenen Film- und Badeigenschaften sind in Tabelle 1 zusammengefasst.

**Tabelle 1**

| Versuchs-Nr. | Vergleich 1 | Vergleich 2 | Beispiel 2 | Beispiel 3 |
|---|---|---|---|---|
| Grundharz A | + | – | + | + |
| Polyisocyanat A | – | – | – | + |
| Polyisocyanat B | + | + | + | – |
| Polyaminoamid-Paste | – | + | + | + |
| pH-Wert | 5,8 | 7,1 | 5,2 | 5,6 |
| Leitfähigkeit ($\mu Scm^{-1}$) | 2050 | 630 | 1970 | 1870 |
| MEQ (Milchsäure) | 90 | 100 | 103 | 125 |
| Spannung 2'30°C | 150 V/15 µm | – | 120 V/20 µm | 150 V/20 µm |
| Härte (30'175°C) (DIN 53157) | 227"/233" | – | 226"/226" | 197"/190" |
| Oberfläche | i.O. | * | i.O. | i.O. |
| Erichsen-Tiefung (DIN 53156) | 0,7 mm | | 2,4 mm | 8,8 mm |
| Absetzprobe | i.O. | | i.O. | i.O. |
| Salzsprühtest (DIN 50021) | | | | |
| Unterwandung am Schnitt = U | | | | |
| 240 h blankes Eisen | | | | |
| 175°C eingebrannt U (mm) | Rost | | 7–9 mm | 6–7 mm |
| 190°C eingebrannt U (mm) | 6–10 mm + Blasen | | 4–5 mm | 2–4 mm |
| 360 h Bonder 127** | | | | |
| 175°C eingebrannt U (mm) | Rost | | 4–6 mm | 4–5 mm |
| 190°C eingebrannt U (mm) | 1,5–3 mm | | 2–5 mm | 4–5 mm |

i.O. = in Ordnung
* = schaumige, dicke Lösung nach dem Verdünnen – nicht abscheidbar
** = ungeschliffene Seite

## Patentansprüche

1. Hitzehärtbares, wässriges Lachüberzugsmittel auf der Grundlage eines durch Säure wasserverdünnbar gemachten Bindemittelgemisches und gegenbenenfalls üblichen Zusätzen, dadurch gekennzeichnet, dass es als Bindemittel in Kombination enhält

A. 50 bis 95 Gew.-% tertiäre Aminogruppen enthaltendes und OH-gruppenhaltiges Polymerisat und/oder Polykondensat (Komponente A) mit der Strukturgruppe

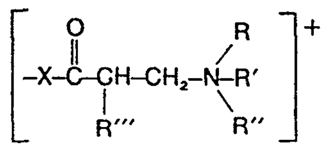

wobei bedeuten:
X = -O-,-NH-oder-$C_6H_4$
R = -$C_nH_{2n+1}$bei n = 1 bis 5
R' = -$C_mH_{2m+1}$bei m = 1 bis 5
n+m = 2 bis 6-
oder R + R' bilden gemeinsam mit dem N-Atom einen Piperidin- oder Morpholinring
R'' = - H, -$C_pH_{2p+1}$
oder -$C_pH_{2p}OH$ bei P = 1 bis 3
R'' = -H, $-CH_3$ oder $-C_2H_5$ und einer Aminzahl von 30 bis 170, speziell 60 bis 120 und einer OH-Zahl von 30 bis 300,

B. 5 bis 40 Gew.-% eines vollverkappten Polyisocyanats (Komponente B), das in der wässrigen Phase stabil ist und bei Wärmeeinwirkung nach Abspaltung der Verkappungsgruppe wieder reaktiv wird,

C. 5 bis 30 Gew.-%, eines expoxidgruppenfreien Polymerisats oder Polykondensats mit primären und/oder sekundären mit verkappten Polyisocyanaten reaktionsfähigen OH- und/oder Aminogruppen (Komponente C), wobei die Summe von A, B und C jeweils 100 Gew.% betragen muß.

2. Lacküberzugsmittel nach Anspruch 1, dadurch gekennzeichnet, dass die Harze der Komponente A Amine addiert enthalten, die bei der thermischen β-Eliminierung eine hohe Flüchtigkeit (Kp von 10 bis + 160°C, insbesondere +5 bis 115°C) und eine möglichst hohe Basizität ($pK_b$-Wert von 2,5 bis 5,5, insbesondere 2,8 bis 4,0 aufweisen.

3. Lacküberzugsmittel nach Anspruch 1 oder 2. dadurch gekennzeichnet. dass die Komponente B Aminogruppen aufweist und die Aminzahl 10 bis 120, vorzugsweise 25 bis 100 beträgt.

4. Lacküberzugsmittel nach einem der Ansprüche 1 bis 3, dadurch gekennzeichnet, dass die Komponente C eine Aminzahl von 0 bis 250, bevorzugt 20 bis 200, besonders bevorzugt 30 bis 100 und eine OH-Zahl von 30 bis 500, bevorzugt 100 bis 300 aufweist.

5. Lacküberzugsmittel nach Anspruch 4, dadurch gekennzeichnet, dass die Komponente C ein Polyaminoalkohol- und/oder Polyaminoamidharz ist.

6. Lacküberzugsmittel nach einem oder mehreren der Ansprüche 1 bis 6, dadurch gekennzelchnet, dass die Komponente A ein Reaktionsprodukt ist aus Polyglycidyläthern mit Acrylsäure und/oder Methacrylsäure und sekundären Aminen.

7. Verwendung des Lacküberzugsmittels nach einem der Ansprüche 1 bis 6 zur elektrischen Ablagerung auf elektrisch leitenden Substraten.

8. Vefahren zur kathodischen Beschichtung eines elektrisch leitenden Substrats unter Verwendung eines wässrigen Lacküberzugsmittels auf der Grundlage eines durch Säure wasserverdünnbar gemachten Bindemittelgemisches und gegebenenfalls üblichen Zusätzen, dadurch gekennzeichnet, dass es ein Bindemittel gemass einem oder mehreren der Ansprüche 1 bis 6 enthält.

## Claims

1. A heat-hardening aqueous lacquer coating composltion based on a binder mixture rendered water-dilutable with an acid and, oplionally, standard additives, charactcrised in that it contains as binder - in combination

A. from 50 to 95% by weight of polymer and/orpolycondensate (component A) containing tertiary amino groups and OH-groups and containing the following structural group

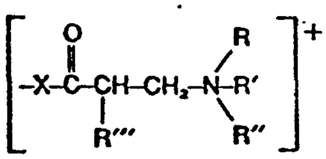

- in which
$X = -O-, -NH-$ or $-C_6H_4$
$R = -C_nH_{2n+1}$with $n = 1$ to 5
$R' = -C_mH_{2m+1}$with $m = 1$ to 5
$n+m = 2$ to 6
or R and R' together with the N-atom form apiperidine or morpholine ring
$R'' = -H_1-C_pH_{2p+1}o$
or $-C_pH_{2p}OH$ with $p = 1$ to 3
$R''' = -H_1-CH_3$ or $-C_2H_6$ and having an amine number of from 30 to 170, more particularly from 60 to 120, and an OH-number of from 30 to 300,

B. from 5 to 40% by weight of a fully maskedpolyisocyznate (component B) which is slable in the aqueous pnase and is reactivated by heat after elimination of the masking group,

C) from 5 to 30% by weight of a polymer or polycondensate which is free of epoxi groups containing primary and/or secondary OH- and/or amino groups which are reactive with capped polisoyanates (component C), the sum of A, B and C being in any case 100 % by weight

2. A lacquer coating composition as claimed in Claim 1, characterised in that the resins of component A contain in added form amines which show high volatility during the thermal n-elimination (B.p. 10 to + 160°C, more particularly from +5 to 115°C) and as high a basicity as possible ($pK_b$-value from 2,5to 5,5, more particularly from 2,8 to 4,0).

3. A lacquer coating composition as claimed in Claim 1 or 2, characterised in that component B contains amino groups and has an amine number of from 10 to 120 and preferalily from 25 to 100.

4. A lacquer coating composition is claimed in any of Claims 1 to 3, characterised in that component C has an amine number ot from 0 to 250, preferably from 20 to 200 and more preferably lor 30 to 100, and an OH-number of from 30 to 500, preferably from 100 to 300.

5. A lacquer coation composition as claimed in Claim 4, characterised in that component C is a polyaminoalcohol and/or polyaminoamide resin.

6. A lacquer coating composition as claimed in one or more of Claims 1 to 5, characterised in that component A is a reaction product of polyglycidyl ethers with acrylic acid and/or methacrylic acid and secondary amlnes.

7. The use of the lacquer coating composition as claimed in any of Claims 1 to 6 for electrical deposition onto electrically conductive substrates.

8. A process for the cathodic coating of an electrically conductive substrate using an aqueous lacquer coating composition based on a binder mixture rendered water-dilutable with an acid and optionally standard additives, characterised in that it contains a binders of the type claimed in one or more of Claims 1 to 6.

**Revendications**

1. Composition de revêtement pour vernis aqueuse, thermodurcissable, à base d'un mélange de liants rendu diluable à l'eau par un acide, et éventuellement d'additifs habituels, caractérisée en ce qu'elle contient en combinaison comme liants

A. de 50 à 95% en poids de polymérisat et/ou de polycondensat contenant des groupes amino tertiaires et des groupes OH (composant A) avec le groupe de structure

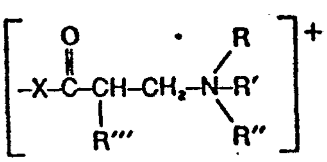

où
$X = -O-, -NH-$ ou $-C_6H_4$
$R = -C_nH_{2n+1}$ avec $n = 1$ à 5

$R' = -C_mH_{2m+1}$ avec m = 1 à 5
n+m=2 à 6
ou R + R' forment ensemble avec l'atomed'azote un noyau pipéridine ou un noyau morpholine;
$R'' = -H, -C_pH_{2p+1}$ ou $-C_pH_{2p}$ avec p = 1 à 3
$R''' = -H, -CH_3$ ou $-C_2H_5$ et un indice d'aminede 30 à 170, en particulier de 60 à 120 et un indice d'OH de 30 à 300;

B. de 5 à 40% en poids d'un polyisocyanate entièrement masqué (composant B), qui est stable dans la phase aqueuse et qui redevient réactif par action de la chaleur après séparation du groupe de masquage;

C. de 5 à 30% en poids d'un polymérisat ou polycondensat ne contenant pas des groupes epoxi avec des groupes OH et/ou amino primaires et/ou secondaires qui sont réactif avec des polyisocyanates masqués composant C), la somme d'A, B et C étant toujours 100 % en poids.

2. Composition de revêtement pour vernis selon la revendication 1, caractérisée en ce que les résines du composant A contiennent des amines ajoutées, qui dans la ß-élimination thermique présentent une volatilite élevée ($P_{eb}$ de 10 à + 160°C, en particulier de + 5 à 115°C) et une basicité la plus élevée possible ($pK_b$ de 2,5 à 5,5, en particulier de 2,8 à 4,0).

3. Composition de revêtement pour vernis selon les revendications 1 ou 2, caractérisée en ce que le composant B présente des groupes amine et en ce que l'indice d'amine s'élève à 120, de préférence de 25 à 100.

4. Composition de revêtement pour vernis selon l'une des revendications 1 à 3, caractérisé en ce que le compsant C présente un indice d'amine de 0 à 250, de préférence de 20 à 100, ou mieux de 30 à 100 et un indice d'OH de 30 à 500, de préférence de 100 à 300.

5. Composition de revêtement pour vernis selon la revendication 4, caractérisé en ce que le composant C est une résine polyaminoalcool et/ou polyaminoamide.

6. Composition de revêtement pour vernis selon une ou plusieurs des revendications 1 à 5, caractérisé en ce que le composant A est un produit de réaction de polyglycidyléthers avec de l'acide acrylique et/ou de l'acide méthacrylique et des amines secondaires.

7. Application de la composition de revêtement pour vernis selon l'une des revendication 1 à 6 ou dépôt électrophorétique sur des substrats conducteurs de l'électricité.

8. Procédé de recouvrement cathodique d'un substrat conducteur de l'électricité en utilisant une composition de revêtement aqueuse pour vernis à base d'une mélange de liants rendu diluable à l'eau par un acide et éventuellement d'additifs habituels, caractérisé en ce qu'elle contient un liant selon une ou plusieurs des revendications 1 à 6.